# EUROPEAN PATENT SPECIFICATION

(11) **EP 2 775 265 B1**
(45) Date of publication and mention of the grant of the patent: **02.08.2017**
(21) Application number: 13157984.9
(22) Date of filing: 06.03.2013
(51) Int. Cl.: G01D 4/00, G06F 1/32, H04W 52/02, G01D 21/00

(54) **Method and apparatus for reducing power consumption in a metering device**
Verfahren und Vorrichtung zur Verringerung des Energieverbrauchs in einer Messvorrichtung
Procédé et appareil permettant de réduire la consommation d'énergie dans un dispositif de dosage

(43) Date of publication of application: 10.09.2014
(73) Proprietor: Rohm Co., Ltd., Kyoto-shi, Kyoto 615-8585 (JP)
(72) Inventor: Yoshida, Satoshi, Kyoto 615-8585 (JP); Khavrov, Vladimir, Kyoto 615-8585 (JP); Habib, Irfan, Kyoto 615-8585 (JP)
(74) Representative: Isarpatent

(56) References cited:
- EP-A1- 0 420 295
- DE-A1-102007 030 597
- DE-A1-102011 079 412
- US-A1- 2013 019 042
- US-B1- 6 289 464
- US-B1- 6 943 667

## Description

The invention relates to a method and apparatus for reducing power consumption of a metering device within a wireless metering system.

EP 0 420 295 A1 discloses a RF transponder for use in an automatic instrument monitoring system. An enhanced protocol is suggested to reduce false wake-ups of a sleeping processor.

US 6 289 464 B1 discloses a wireless receiver waking-up a processor of a portable computing device when wireless information fills a threshold of the memory in the wireless receiver.

US 6 943 667 B1 relates to a method for data transmission between a first and a second electronic device, wherein the second device is in a sleep mode. A processor of the second device determines if a signal is sent from a known source. In this case, an interrupt signal is generated to wake-up the microprocessor of the second device.

US 2013/0019042 A1 shows a method for saving power using packet filtering by a network interface.

DE 10 2011 079 412 A1 discloses a CAN-bus system receiving wake-up information.

DE 10 2007 030 597 A1 discloses a sensor unit comprising a pre-processor and a processor. The pre-processor may be configured by the main processor. In particular, this pre-processor performs operation for preparing the measurement data of a sensor before the data are processed by the main processor.

A metering device is provided to measure a quantity of a utility consumed by a consumer and to notify another entity about the measured quantity via a communication link. The communication link can be formed by a wireless M-bus which is a European smart metering communication standard (EN 13757-4). This smart metering communication standard specifies communications between metering devices and data collectors or gateways. The metering devices can be adapted to measure any kind of utility such as water, gas, heat or electric power. The metering device can communicate with other system components, for example mobile readout devices, stationary receivers, data collectors or system network components.

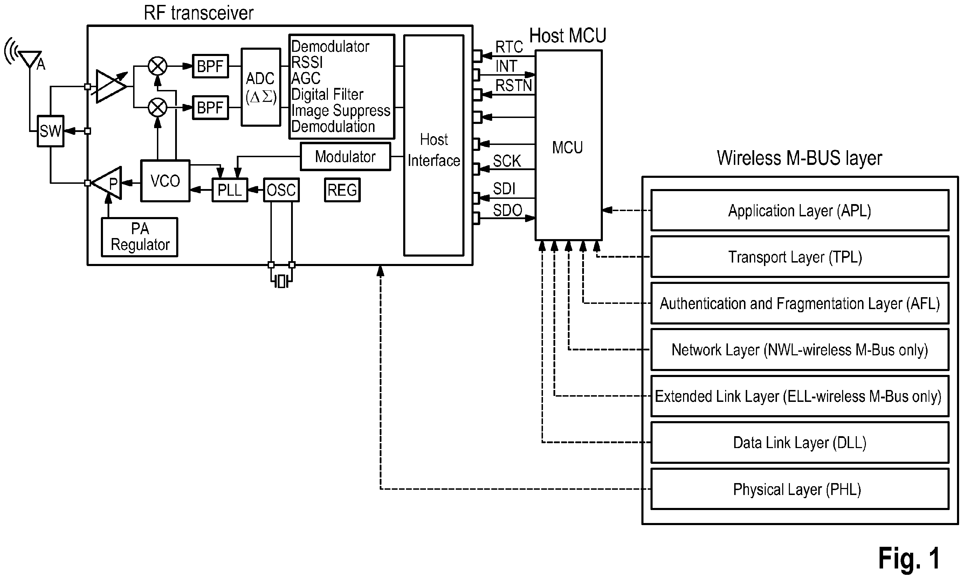

Fig. 1 shows a block diagram of a conventional metering device comprising a RF transceiver and a host microcontroller unit MCU. The metering device comprises an antenna A connected to the RF transceiver to transmit and receive frames via a wireless link to/from other entities of the wireless metering system. The RF transceiver of the conventional metering device is used for processing the data transported in the frames on the physical layer. A data link layer and above layers are mainly processed by a software executed on the host MCU (microcontroller unit) as illustrated in Fig. 1. The host MCU is connected to the RF transceiver by means of a host interface. As shown in Fig. 1, the RF transceiver comprises several units including a voltage control oscillator VCO and a power amplifier regulator. The oscillator generates an oscillation signal provided to a phase-locked loop PLL which in turn is connected to the voltage control oscillator VCO. The voltage control oscillator provides signals for a mixing stage to which band-pass filter units BPF are connected. An analog digital converter ADC converts the received analog signal to digital signals applied to a demodulator. The demodulator applies the demodulated data via the host interface of the RF transceiver to the host microcontroller unit MCU as shown in Fig. 1. Data processed by the MCU is supplied via the host interface of the RF transceiver to a digital modulator connected to the phase-locked loop PLL.

In the conventional metering device as shown in Fig.1, the host MCU executing the software for processing the data of a received frame has to wake up from a sleep mode every time when the metering device receives an incoming message or frame from the surrounding wireless network. If a matching preamble and/or synchronization word of a received frame is detected by the metering device, the microcontroller unit MCU of the respective metering device is automatically activated, i.e. it wakes up from a sleep mode. Then, the microcontroller unit MCU processes data transported in data fields of the received frame. For instance, if the microcontroller unit MCU detects that the data content of at least one header field of the received frame has matching data content a corresponding data processing of data transported in data fields of the received frame is performed by a processing software executed by the microcontroller unit MCU. Accordingly, in the conventional metering device, the host MCU of the respective device has to be woken up from a sleep mode to evaluate the first received frame no matter whether the data content in any of the header fields of the received frame is valid or not. Consequently, the host MCU in a conventional metering device is switched from a sleep mode with a low power consumption to an operation mode for data processing with a high power consumption more often than really necessary. Accordingly, a disadvantage of a conventional metering device as illustrated in Fig. 1 is that its average power consumption is relatively high. Since most metering devices are supplied by a local battery, a high average power consumption reduces the battery life significantly so that the total operation time of the metering device within the system is also reduced.

Accordingly, it is an object of the present invention to provide a method and apparatus for reducing a power consumption of a metering device within a wireless metering system.

This object is achieved by a method comprising the features of claim 1.

An advantage provided by the method according to the first aspect of the present invention is that the average power consumption is reduced. Moreover, the chances of an unnecessary activation of the host MCU within the metering device during a standby period are reduced as well. Moreover, by the method according to the present invention, processing resources of the MCU unit can be saved as well. These processing resources might be used for other purposes.

In a possible embodiment of the method according to the present invention, the hardware accelerator circuit checks the data content of a length header field indicating a length of the received frame,
and/or a control header field indicating a frame type of the received frame and having a function code,
and/or an ID-header field comprising a manufacturer ID of the sending device,
and/or an address header field indicating an address of the sending device.

In a further possible embodiment of the method according to the present invention, the hardware accelerator circuit performs a cyclic redundancy check using a predetermined CRC polynomial and wakes up the microcontroller unit (MCU) if the CRC-check is successful.

In a further possible embodiment of the method according to the present invention, the transceiver is a RF transceiver which operates at a 868 MHz band.

In a further possible embodiment of the method according to the present invention, the transceiver is a RF transceiver which operates in a 433 MHz band.

In a still further possible embodiment of the method according to the present invention, the transceiver is a RF transceiver which operates in a 169 MHz band..

In a further possible embodiment of the method according to the present invention, the expectation wake-up value is written by the microcontroller unit into the register of the hardware accelerator circuit before the microcontroller unit enters a sleep mode.

In a further possible embodiment of the method according to the present invention, a timer of the hardware accelerator circuit wakes up the transceiver periodically to receive frames to be checked by the hardware accelerator circuit.

In a further possible embodiment of the method according to the present invention, the timer of the hardware accelerator circuit is set by the microcontroller unit.

According to a second aspect of the present invention, a metering device according to claim 8 is provided.

In a possible embodiment of the metering device according to the second aspect of the present invention, the hardware accelerator circuit is configured to check the data content of a length header field indicating a length of the frame and/or a control header field indicating a frame type of the received frame and having a function code and/or an ID-header identification field comprising a manufacture ID of the sending device, and/or an address field indicating an address of the sending device.

In a possible embodiment of the metering device according to the second aspect of the present invention, the hardware accelerator circuit is configured to perform a cyclic redundancy check using a predetermined CRC polynomial and to wake up the microcontroller unit of the metering device if the CRC-check is successful.

In a further possible embodiment of the metering device according to the second aspect of the present invention, the hardware accelerator circuit comprises a timer adapted to wake up the transceiver of the metering device periodically to receive frames transmitted via the wireless link.

In a further possible embodiment of the metering device according to the present invention, the transceiver and microcontroller unit of the metering device are supplied with a supply voltage of a battery provided in the metering device.

In a still further possible embodiment of the metering device according to the present invention, the hardware accelerator circuit is integrated in the transceiver of the metering device.

According to a further third aspect of the present invention a wireless metering system comprising at least one metering device according to the second aspect of the present invention is provided wherein the metering devices are connected to each other via wireless links in a home area network and comprising a gateway connected to a server of a utility supplier through a wide area network.

In a further possible embodiment of the wireless metering system according to the third aspect of the present invention, the metering device is adapted to measure a quantity of a utility consumed by a consumer and to notify the measured quantity via the wireless link.

In the following possible embodiments of the method and apparatus for reducing power consumption of a metering device within a wireless metering system are explained in more detail with reference to the enclosed figures.
- Fig. 1: shows a block diagram of a conventional metering device;
- Fig. 2: shows a block diagram of a possible embodiment of a metering device according to an aspect of the present invention;
- Fig. 3: shows a block diagram of a possible implementation of a transceiver within a metering device according to an aspect of the present invention;
- Fig. 4: shows a functional block diagram of a hardware accelerator circuit implemented within a metering device according to an aspect of the present invention;
- Fig. 5: shows a data structure of a possible implementation of a frame received and processed by a metering device according to the present invention;
- Fig. 6: shows a flowchart illustrating the operation of a method and apparatus for reducing power consumption of a metering device according to the present invention;
- Figs. 7A, 7B: show different data formats of frames as used by a wireless M-bus;
- Figs. 8A, 8B: show timing diagrams for illustration of the operation of a method and apparatus for reducing power consumption of a metering device according to the present invention in comparison to the operation of a conventional metering device;
- Fig. 9: illustrates a possible embodiment of a metering system according to a further aspect of the present invention.

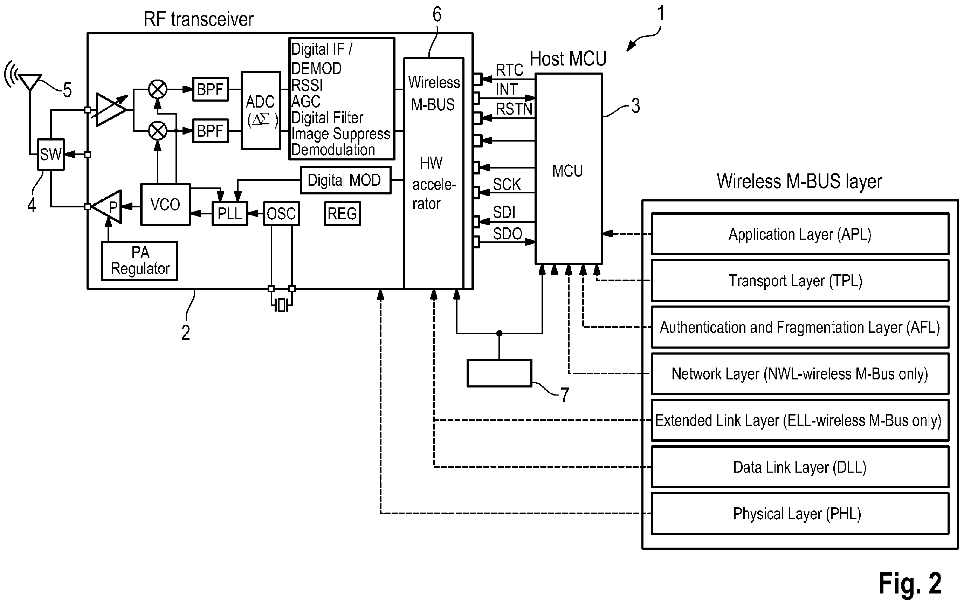

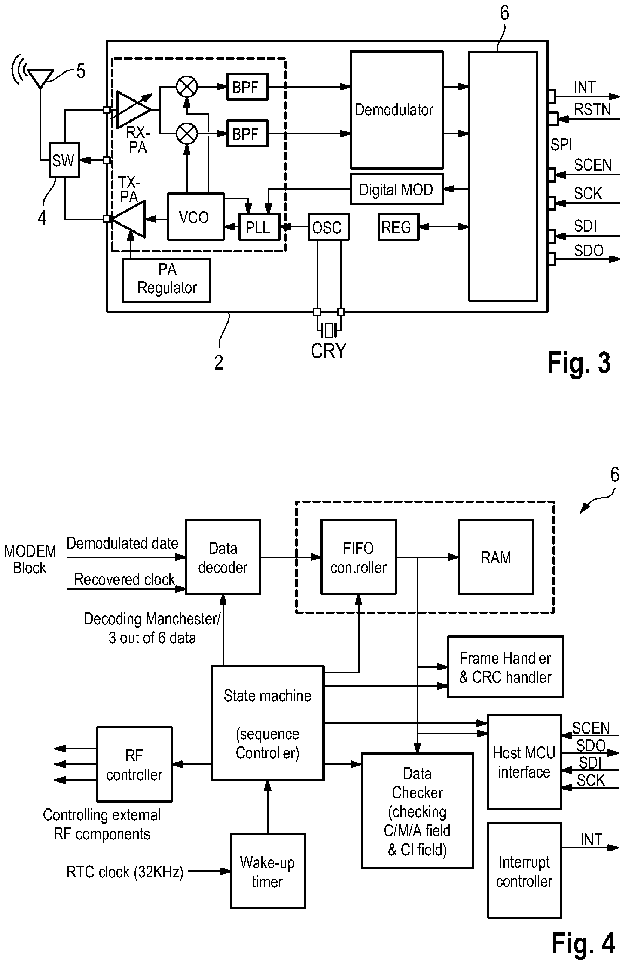

As can be seen in Fig. 2, the metering device 1 according to a first aspect of the present invention comprises in the shown embodiment a transceiver 2 and a microcontroller unit 3. The transceiver 2 can be formed by a RF transceiver for wireless communication by means of frames F transmitted via a wireless link. The transceiver 2 comprises several entities as described in more detail in context with Fig. 3. The transceiver 2 is connected by means of an antenna switch 4 to an antenna 5 which is provided for receiving and transmitting frames via a wireless link. The transceiver 2 and the microcontroller unit 3 are connected to each other via an interface as shown in Fig. 2. In the shown implementation of Fig. 2, the transceiver 2 comprises a hardware accelerator circuit 6 at the interface between the transceiver and the host MCU 3. The metering device 1 further comprises a power supply source 7 which supplies the transceiver 2 and the MCU 3 with electrical power. As can be seen in Fig. 2, the metering device 1 comprises the hardware accelerator circuit 6 which is configured to check a preamble and/or a synchronization word of a frame F received by the transceiver 2. If a matching preamble and/or a matching synchronization word is detected by the hardware accelerator circuit 6, the hardware accelerator circuit 6 is configured to check the data content of the at least one header field of the received frame F. If a matching data content is detected by the hardware accelerator circuit 6, the hardware accelerator circuit 6 is further configured to wake up the microcontroller unit 3 of the metering device 1 from a sleep mode to process data transported in data fields of the received frame F. Fig. 4 shows a functional block diagram of a possible implementation of a hardware accelerator circuit 6 which communicates with the host MCU 3 via the interface.

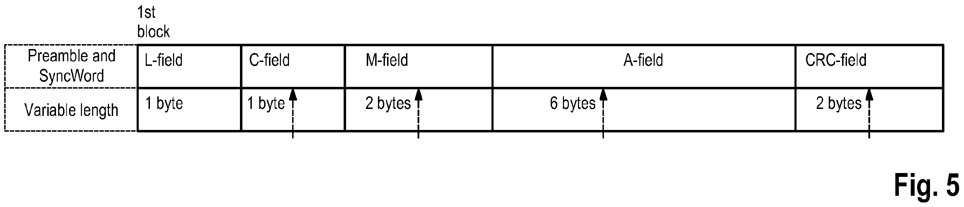

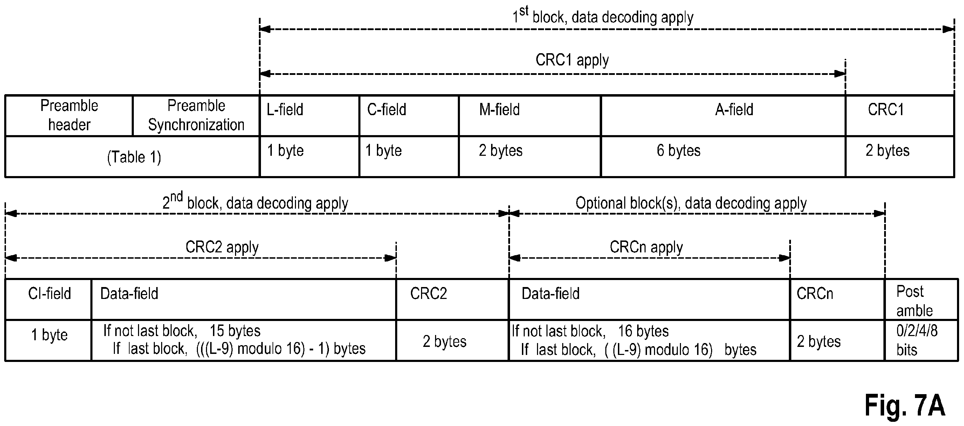

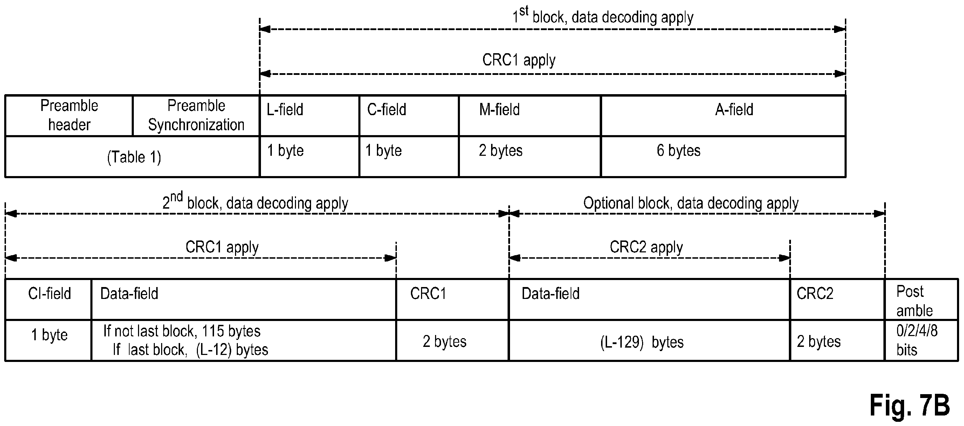

Fig. 5 shows a possible data structure of a frame F transported via the wireless link and received by the transceiver 2 within the metering device 1. Fig. 5 shows as an exemplary embodiment the frame structure of a wireless M-bus frame transmitted from a sending device of the system to the metering device 1 as shown in Fig. 2. As can be seen in Fig. 5, the frame F comprises a preamble and synchronization word followed by several header fields and a CRC-field. Different types of frames of a wireless M-bus with different data formats can be used such as format A and format B as illustrated in Figs. 7A, 7B. The preamble can indicate which type and/or format A or B the respective received frame F does have. The frame can comprise one or several data fields as illustrated in Figs. 7A, 7B. As shown in Fig. 5 and Figs. 7A, 7B, the received frame F can comprise several header fields. This header field can comprise as shown in Fig. 5 and Figs. 7A, 7B a length header field (L) indicating a length of the received frame F,
a control header field (C) indicating a frame type of the received frame F including a function code, an ID header field M comprising a manufacture ID of the sending device which has sent the received frame F and an address header field A indicating an address of the sending device. In the illustrated implementation, the L header field can comprise 1 byte, the control header field C can comprise also 1 byte, the ID header field can comprise 2 bytes and the address header field A includes 6 bytes. The frame F further comprises a cyclic redundancy check field CRC comprising for instance 2 bytes. The hardware accelerator circuit 6 has a calculation unit which is adapted to perform a cyclic redundancy check using a predetermined CRC polynomial which wakes up the microcontroller unit 3 if the CRC-check is successful. The used CRC polynomial is stored in the memory register of the hardware accelerator circuit 6. In a possible implementation, the CRC polynomial used by the hardware accelerator circuit 6 is X¹⁶+X¹³+X¹²+X¹¹+X¹⁰+X⁸+X⁶+X⁵+X²+1.

In a possible embodiment, the hardware accelerator circuit 6 of the metering device 1 comprises one or several registers or memories which store an expectation wake-up value for each header field of the received frame F expected by the metering device 1 for waking up the microcontroller unit 3 of the metering device 1. These wake-up values are written by the microcontroller unit 3 into the registers of the hardware accelerator circuit 6 before the microcontroller unit 3 enters a sleep mode. The hardware accelerator circuit 6 comprises in a possible implementation a wake-up timer which is adapted to wake up the transceiver 2 periodically to receive frames F to be checked by the hardware accelerator circuit 6. This wake-up timer of the hardware accelerator circuit 6 can be set in a possible embodiment by the microcontroller unit 3.

To reduce the power consumption of the metering device 1 having the transceiver 2 for wireless communication by means of frames transmitted via a wireless link and comprising the microcontroller unit 3 for data processing the following steps are performed. First, a preamble and/or synchronization word of the received frame F is checked by the hardware accelerator circuit 6 of the metering device 1. If a matching preamble and/or synchronization word of the respective metering device 1 is detected by the hardware accelerator circuit 6 of the metering device 1, the hardware accelerator circuit 6 checks the data content within at least one header field of the received frame, i.e. the data content of the length header field L, and/or the data content of the control header field C and/or the data content of the ID header field M and/or the data content of the address header field A of the received frame F. What kind of header fields are checked in this step can be preconfigured. In a possible embodiment, the hardware accelerator circuit 6 might check only the data content within one header field of the received frame F, whereas in another implementation the data content of all header fields is checked. In a possible embodiment, if the data content of several or all header fields is checked by the hardware accelerator circuit 6, a complete match is detected when there is a match for each header field. Matching can be defined according to a preconfigured matching rule. A possible matching rule is that a match for all four header fields within a header of an M-bus frame F must be given, i.e. the data content corresponds to a value stored in a corresponding register of the hardware accelerator circuit 6. For example, a match is detected if there is a match in the L-header field and in the C-header field and in the M-header field as well as in the A-data field (L and C and M and A). In an alternative implementation, a match is detected if there is a match in one single header field of the received frame, i.e. if there is a match in the L-header field or in the C-data field or in the M-header field or in the A-header field (L or C or M or A). Any logical combinations of matches within the different header fields can be evaluated as a complete match for the respective metering device 1. The expectation wake-up values to which the content within the header fields of the received frame F are compared are stored in corresponding registers of the hardware accelerator circuit 6. In a possible embodiment, for each header field a corresponding register within the hardware accelerator circuit 6 is provided. The expectation wake-up values stored in these registers are read from the registers to be compared with the corresponding data contents within the header fields of the received frames F. If there is a match for the respective expectation wake-up value in the corresponding header field, a logical value can be generated indicating whether that there is a match or not for the respective header field. In a possible embodiment, these logical values are supplied to a logic circuit which performs a logic operation with the received logic values (for instance L and C and M and A (L + C + M + A), wherein L is the logic value indicating whether there was a match for the L-header field, C is the logical value indicating whether there was a match for the C-header field, M is the logic value indicating whether there is a match for the M-field and A is the logic value indicating whether there is a match for the A-field). This logic can in a possible embodiment be programmable for different combinations.

If a matching data content with at least one header field has been detected by the hardware accelerator circuit 6, the hardware accelerator circuit 6 wakes up the microcontroller 3 from a sleep mode into a data processing operation mode. In the data processing operation mode, the microcontroller unit 3 is adapted to process data transported in data fields of the received frame. Accordingly, the host MCU 3 is only woken up by the hardware accelerator circuit 6 of the transceiver 2 when an expected command or expected wake-up value from the surrounding network is received. If the expected wake-up values have been confirmed by the hardware accelerator circuit 6 the host MCU 3 which has been in a standby or sleep mode does start to process subsequent data transported in data fields of the received frame F.

Fig. 3 shows a block diagram of a possible implementation of a transceiver 2 comprising an integrated hardware accelerator circuit 6. The transceiver 2 is an RF transceiver connected by means of an antenna switch 4 to the transmitting receiving antenna 5 for communication with other devices, in particular metering devices 1 of the system. The voltage control oscillator VCO is driven by a phase-locked loop PLL, connected to an oscillation signal generation circuit OSC which can be connected as shown in the shown implementation to a crystal CRY. The power amplifier PA connected to the voltage control oscillator VCO can be regulated by a power amplifier regulator circuit. The power amplifier regulator circuit assists the power amplifier PA to provide a stable output signal power. This signal power can be in a range from 1mW to 20mW. The antenna switch 4 can be connected to a receiving amplifier with an adjustable gain. The output signal of the receiving amplifier is split and provided to multipliers of a mixing stage controlled by the voltage control oscillator VCO. The output signal of the multiplying circuits is applied to band-pass filters BPF, wherein the filtered signal is applied to a demodulator.

After analog-digital conversion (ADC), the demodulator performs a demodulation of the received signal and supplies the demodulated signals in a possible embodiment to the hardware accelerator circuit 6 as shown in Fig. 3. The hardware accelerator circuit 6 can have access to one or several registers REG. In these registers REG one or several expectation wake-up values for different header fields of a received frame F can be stored. In a possible embodiment the expectation wake-up values are written into the registers REG by the microcontroller unit 3 before the microcontroller unit 3 enters a standby or sleep mode. Further, it is possible that the expectation wake-up values stored in the register REG are preconfigured for the system. In a still further possible embodiment, the expectation wake-up values can be distributed in the system in a configuration mode or configuration phase as data transported in frames to be stored in the registers REG for later operation. The transceiver 2 further comprises a digital modulator for modulating data received from the hardware accelerator circuit 6.

Fig. 4 shows a functional block diagram of a possible embodiment of a hardware accelerator circuit 6 of a transceiver 2 as illustrated in Fig. 3. The core of the hardware accelerator circuit 6 in the shown implementation is a state machine or sequence controller which is connected to a RF controller. The RF controller is adapted to control external RF components of the transceiver 2. The data decoder of the hardware accelerator circuit 6 is connected to the demodulator of the transceiver 2 to receive demodulated data and a recovered clock. In a possible embodiment, the data decoder can perform a Manchester decoding of the received demodulated data. The data decoder is connected to a FIFO controller connected to the state machine. A RAM memory is connected to the FIFO controller. The hardware accelerator circuit 6 can further comprise a frame handler and CRC handler as illustrated in Fig. 4. A data checking unit is provided for checking the header fields of the received frame F, i.e. the length header field L, the control header field C, the ID header field M and the address header field A. The hardware accelerator circuit 6 comprises a host MCU interface and an interrupt controller as shown in Fig. 4.

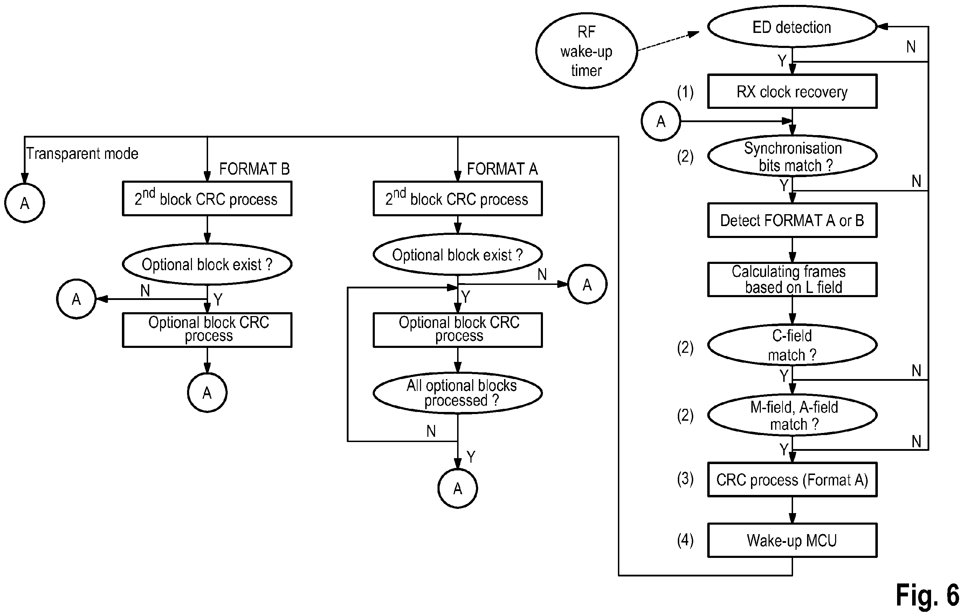

Fig. 6 shows a flow diagram of a possible implementation for processing data by a metering device 1 according to an aspect of the present invention.

A wake-up timer can be integrated in the hardware accelerator circuit 6 as shown in Fig. 4. The transceiver 2 is periodically woken up to receive frames F to be checked by the hardware accelerator circuit 6. After energy detect ED a clock recovery is performed. In a further step, it is checked whether the synchronization bits or synchronization word do match. If this is the case it is detected whether the received frame F has a format A as illustrated in Fig. 7A, or a format B as illustrated in Fig. 7B. In a further step, the frame is processed based on the data content carried in the length header field L of the frame F. In a first step, it is checked whether the data content carried in the control header field C does match with the corresponding expectation wake-up value. In a further step it can also be checked whether there is a match for the data content carried in the ID header field M and/or in the address field A. If there is a complete match in the C-, M- and A-field, the hardware accelerator circuit 6 performs a cyclic redundancy check CRC by means of its integrated CRC handler using a preconfigured CRC polynomial and,wakes up the microcontroller unit MCU if the CRC-check is successful. After that, depending on the detected format A or B further processing of the received frame F is performed as illustrated in Fig. 6.

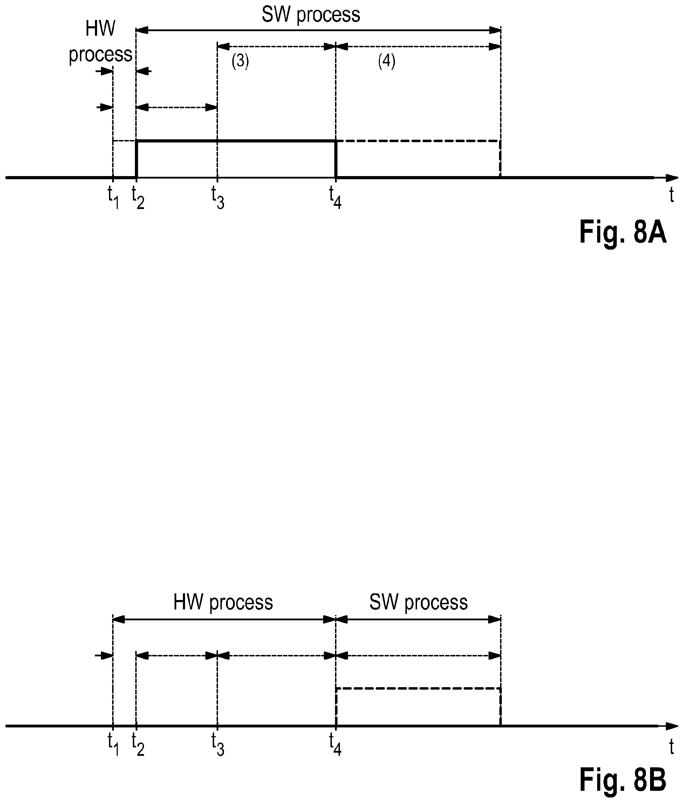

Figs. 8A, 8B illustrate the operation for a metering device 1 according to the present invention in comparison to a conventional metering device. Fig. 8A illustrates the conventional method or way of processing the received frames. In contrast, Fig. 8B illustrates the operation and performing the method according to the present invention. As can be seen in Fig. 8A, in a conventional metering device a hardware checks after t₁ the preamble and synchronization word of a received frame and wakes up the MCU at t₂ if the match was successful. Accordingly, the MCU is activated to evaluate the first frame no matter whether the L-field, C-field, M-field and/or A-field carry a valid data content or not. The MCU then checks the data content of the header field, in particular the L-field, C-field, M-field and A-field until time t₃. If there is a match, the MCU processes the CRC-field (in case of format A) until t₄. If the CRC-check is successful, the MCU processes a second and third frame etc. as illustrated in Fig. 8A.

In contrast with the method according to the present invention, the hardware does check the preamble and synchronization word of a received frame F starting a t₁ until t₂. The hardware accelerator circuit 6 further processes if there is a match of the preamble and/or synchronization word the header fields until t₃ and if there is a match, a CRC-check is performed by the hardware accelerator circuit 6 until t₄. Only after the CRC-check has been successful, the MCU 3 is activated or woken up by the hardware accelerator circuit 6 at t₄ to process the data carried in the received frame F. As can be seen by the comparison of Figs. 8A, 8B, the MCU 3 within the metering device 1 according to the present invention is activated at t₄, wherein the MCU in a conventional metering device is already activated at t₂. The MCU 3 in the metering device 1 according to the present invention is only woken up, if a data content carried in the header fields C, L, M, A does match the stored expectation wake-up values and if the CRC-redundancy check was successful. Accordingly, the MCU unit 3 in the metering device 1 according to the present invention is woken up only if really necessary and much less frequently than the MCU unit in a conventional metering device. Since the MCU unit 3 is woken up less frequently, the average power consumption of the metering device 1 is reduced significantly. Further, the MCU processing resources are saved and can be used for other calculations. Since the power consumption of the MCU 3 with the method according to the present invention is reduced significantly, the operation lifetime of the metering device 1 which is normally supplied by battery, is increased.

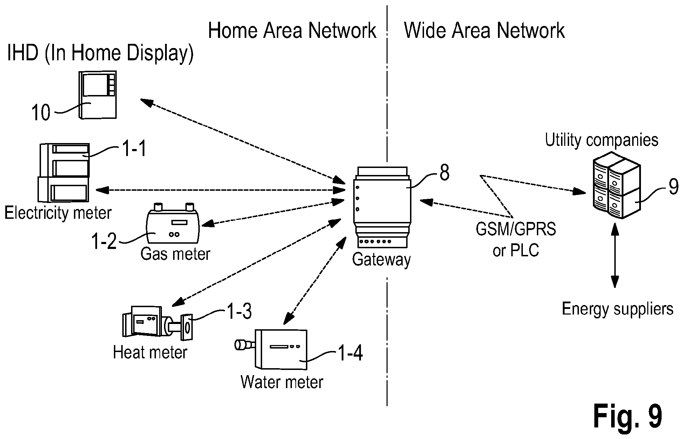

Fig. 9 shows an exemplary embodiment for a wireless metering system comprising at least one metering device 1 according to the first aspect of the present invention. In the shown embodiment, the wireless metering system comprises several metering devices 1-1, 1-2, 1-3, 1-4 and all can be connected via a wireless link to a gateway of the system. A wireless link between the metering device 1-i and the gateway 8 can be formed by a wireless M-bus. Each metering device 1-i comprises a transceiver 2 which can be a RF transceiver which operates with one or several different frequencies bands. This frequency band can comprise a 868 MHz band and/or a 433 MHz band and/or a 169 MHz band. The operation frequency band can be preconfigured. Further, in a possible embodiment, a switch between different frequency bands can be performed by the transceiver. The metering devices 1-i are smart metering devices which are adapted to measure a quantity of a utility consumed by a consumer and to notify the measured quantity via the wireless link to the gateway 8. In the shown example of Fig. 9, the first metering device 1-1 can be an electricity meter, the second metering device 1-2 is a gas metering device, the third metering device 1-3 is a heat metering device and the fourth metering device 1-4 is a water metering device. All metering devices 1-i can be battery-operated devices. The battery can be integrated in a housing of the respective metering device 1-i. In a possible embodiment, the metering devices operate without any operator's intervention without battery replacement over a full operation lifetime. Further components such as mobile readout or stationary equipment can have a shorter battery lifetime or can have an external power supply. In the wireless metering system the gateway 8 does also comprise a wireless link to a display device 10. A metering device 1-i can measure the quantity of a utility consumed by a consumer or apparatus such as electricity, gas amount, heat or water volume. The gateway 8 can collect this data and send it to the display device 10 for information of a user. The metering devices 1-i and the display form part of a home area network. The gateway 8 can be connected as shown in Fig. 9 to a server 9 of a utility supplier in a wide area network WAN. The communication between the gateway 8 and the server 9 of the utility supplier can be via a GSN/GPS network or via powerline communication PLC. Each or some of the metering devices 1-i of the metering system shown in Fig. 9 comprises a hardware accelerator circuit 6 which is configured to check a preamble and/or synchronization word of a frame F received by the transceiver of the respective metering device 1-i from the gateway 8. If the hardware accelerator circuit 6 of the metering device 1-i detects a matching preamble or matching synchronization word, it checks in a further step the data content of at least one header field of the received frame F. If a matching data content is detected by the hardware accelerator circuit 6 of the respective metering device 1-i, the hardware accelerator circuit 6 of this metering device is configured to wake up the microcontroller unit 3 of the metering device from a sleep mode to process data transported in the data fields of the received frame F. The hardware accelerator circuit 6 within each metering device 1-i allows for lower average power consumption and a longer operation time of the respective metering device 1-i within the wireless system 1 shown in Fig. 9.

## Claims

1. A method for reducing power consumption of a metering device (1) having a transceiver (2) for wireless communication by means of frames (F) transmitted via a wireless link and a microcontroller unit (3) for data processing,
the method comprising the steps of:
(a) checking a preamble and/or a synchronization word of a frame (F) received by the transceiver (2) by a hardware accelerator circuit (6) of said transceiver (2),
(b) if a matching preamble and/or a synchronization word has been detected by said hardware accelerator circuit (6) checking by said hardware accelerator circuit (6) the data content within at least one header field of the received frame (F); and
(c) if a matching data content within the at least one header field has been detected by said hardware accelerator circuit (6) waking up the microcontroller unit (3) from a sleep mode by said hardware accelerator circuit (6) to process data transported in data fields of the received frame (F)
wherein the wireless link is a wireless M-bus, and
wherein the hardware accelerator circuit (6) of the metering device (1) comprises a register, which stores an expectation wake-up value for each header field of a received frame (F) expected by the metering device (1) for waking up the microcontroller unit (3) of the respective metering device (1).

2. The method according to claim 1, wherein the hardware accelerator circuit (6) checks the data content of
a length header field (L) indicating a length of the received frame (F),
and/or a control header field (C) indicating a frame type of the received frame (F) and having a function code,
and/or an ID-header field (M) comprising a manufacturer ID of the sending device,
and/or an address header field (A) indicating an address of the sending device.

3. The method according to claim 1 or 2, wherein the hardware accelerator circuit (6) performs a cyclic redundancy check (CRC) using a predetermined CRC polynomial and wakes up the microcontroller unit (3) if the CRC-check is successful.

4. The method according to one of the preceding claims 1 to 3, wherein the transceiver (2) is a RF transceiver which operates in a 868 MHz band and/or a 433 MHz band and/or a 169 MHz band.

5. The method according to any of claims 1 to 4, wherein the expectation wake-up value is written by the microcontroller unit (3) into the register of the hardware accelerator circuit (6) before the microcontroller unit (3) enters a sleep mode.

6. The method according to claim 5, wherein a timer of said hardware accelerator circuit (6) wakes up the transceiver (2) periodically to receive frames (F) to be checked by the hardware accelerator circuit (6).

7. The method according to claim 6, wherein the timer of the hardware accelerator circuit (6) is set by the microcontroller unit (3).

8. A metering device comprising
a transceiver (2) for wireless communication by means of frames (F) transmitted via a wireless link and comprising a microcontroller unit (3) for data processing,
wherein the metering device (1) has a hardware accelerator circuit (6) configured to check a preamble and/or a synchronization word of a frame (F) received by the transceiver (2) and if a matching preamble and/or matching synchronization word is detected by said hardware accelerator circuit (6) the hardware accelerator circuit (6) is further configured to check the data content of at least one header field of the received frame (F) and if a matching data content is detected by the hardware accelerator circuit (6) the hardware accelerator circuit (6) is further configured to wake up the microcontroller unit (3) of the metering device (1) from a sleep mode to process data transported in data fields of the received frame (F)
wherein the wireless link is a wireless M-bus, and
wherein the hardware accelerator circuit (6) of the metering device (1) comprises a register which is adapted to store an expectation wake up value for at least one header field of the received frame (F) expected by the metering device (1) for waking up the microcontroller unit (3) of the respective metering device (1).

9. The metering device according to claim 8, wherein the hardware accelerator circuit (6) is configured to check the data content of
a length header field (L) indicating a length of the frame (F); and/or
a control header field (C) indicating a frame type of the received frame (F) and having a function code and/or
an ID-header identification field (M) comprising a manufacture ID of the sending device, and/or
an address field (A) indicating an address of the sending device.

10. The metering device according to claims 8 or 9, wherein the hardware accelerator circuit (6) is configured to perform a cyclic redundancy check (CRC) using a predetermined CRC polynomial and to wake up the microcontroller unit (3) of the metering device (1) if the CRC check is successful.

11. The metering device according to one of the preceding claims 8 to 10, wherein the hardware accelerator circuit (6) comprises a timer adapted to wake up the transceiver of the metering device (1) periodically to receive frames (F) transmitted via the wireless link.

12. The metering device according to one of the preceding claims 8 to 11, wherein the transceiver (2) and microcontroller unit (3) of the metering device (1) are supplied with a supply voltage of a battery provided in said metering device (1).

13. The metering device according to one of the preceding claims 8 to 12, wherein said hardware accelerator circuit (6) is integrated in the transceiver (2) of said metering device (1).

14. A wireless metering system comprising at least one metering device (1) according to one of the preceding claims 8 to 13 connected to each other via a wireless link in a home area network and comprising a gateway (8) connected to a server (9) of a utility supplier in a wide area network.

15. The wireless metering system according to claim 14, wherein the metering device (1) is adapted to measure a quantity of a utility consumed by a consumer and to notify the measured quantity via the wireless link.

## Patentansprüche

1. Verfahren zum Reduzieren des Stromverbrauchs eines Zählers (1), der einen Transceiver (2) für eine Drahtloskommunikation mittels Frames (F), die über einen Drahtloslink gesendet werden, und eine Microcontroller-Einheit (3) zur Datenverarbeitung aufweist,
wobei das Verfahren folgende Schritte umfasst:
(a) Überprüfen einer Präambel und/oder eines Synchronisationswortes eines durch den Transceiver (2) empfangenen Frames (F) durch eine Hardwarebeschleunigerschaltung (6) des Transceivers (2),
(b) wenn eine übereinstimmende Präambel und/oder ein übereinstimmendes Synchronisationswort durch die Hardwarebeschleunigerschaltung (6) detektiert wurden, Überprüfen, durch die Hardwarebeschleunigerschaltung (6), des Dateninhalts innerhalb mindestens eines Header-Feldes des empfangenen Frames (F), und
(c) wenn ein übereinstimmender Dateninhalt innerhalb des mindestens einen Header-Feldes durch die Hardwarebeschleunigerschaltung (6) detektiert wurde, Aufwecken der Microcontroller-Einheit (3) aus einem Schlummermodus durch die Hardwarebeschleunigerschaltung (6), um Daten zu verarbeiten, die in Datenfeldern des empfangenen Frames (F) transportiert wurden,
wobei der Drahtloslink ein drahtloser M-Bus ist und
wobei die Hardwarebeschleunigerschaltung (6) des Zählers (1) ein Register umfasst, das einen Erwartungs-Aufweckwert für jedes Header-Feld eines empfangenen Frames (F) speichert, der durch den Zähler (1) erwartet wird, um die Microcontroller-Einheit (3) des jeweiligen Zählers (1) aufzuwecken.

2. Verfahren nach Anspruch 1, wobei die Hardwarebeschleunigerschaltung (6) die Dateninhalte von Folgendem überprüft:
eines Längen-Header-Feldes (L), das eine Länge des empfangenen Frames (F) angibt,
und/oder eines Steuerungs-Header-Feldes (C), das einen Frame-Typ des empfangenen Frames (F) angibt und einen Funktionscode hat,
und/oder eines ID-Header-Feldes (M), das eine Hersteller-ID des sendenden Gerätes umfasst
und/oder eines Adress-Header-Feldes (A), das eine Adresse des sendenden Gerätes anzeigt.

3. Verfahren nach Anspruch 1 oder 2, wobei die Hardwarebeschleunigerschaltung (6) eine zyklische Redundanzüberprüfung (CRC) unter Verwendung eines zuvor festgelegten CRC-Polynoms ausführt und die Microcontroller-Einheit (3) aufweckt, wenn die CRC erfolgreich ist.

4. Verfahren nach einem der vorangehenden Ansprüche 1 bis 3, wobei der Transceiver (2) ein HF-Transceiver ist, der in einem 868 MHz-Band und/oder einem 433 MHz-Band und/oder einem 169 MHz-Band arbeitet.

5. Verfahren nach einem der Ansprüche 1 bis 4, wobei der Erwartungs-Aufweckwert durch die Microcontroller-Einheit (3) in das Register der Hardwarebeschleunigerschaltung (6) geschrieben wird, bevor die Microcontroller-Einheit (3) in einen Schlummermodus eintritt.

6. Verfahren nach Anspruch 5, wobei ein Timer der Hardwarebeschleunigerschaltung (6) den Transceiver (2) periodisch aufweckt, um Frames (F) zu empfangen, die durch die Hardwarebeschleunigerschaltung (6) zu überprüfen sind.

7. Verfahren nach Anspruch 6, wobei der Timer der Hardwarebeschleunigerschaltung (6) durch die Microcontroller-Einheit (3) eingestellt wird.

8. Zähler, umfassend:
einen Transceiver (2) zur Drahtloskommunikation mittels Frames (F), die über einen Drahtloslink gesendet werden, und der eine Microcontroller-Einheit (3) zur Datenverarbeitung umfasst,
wobei der Zähler (1) eine Hardwarebeschleunigerschaltung (6) aufweist, die dafür ausgebildet ist, eine Präambel und/oder ein Synchronisationswort eines durch den Transceiver (2) empfangenen Frames (F) zu überprüfen, und wenn eine übereinstimmende Präambel und/oder ein übereinstimmendes Synchronisationswort durch die Hardwarebeschleunigerschaltung (6) detektiert werden, so die Hardwarebeschleunigerschaltung (6) des Weiteren dafür ausgebildet ist, den Dateninhalt mindestens eines Header-Feldes des empfangenen Frames (F) zu überprüfen, und wenn ein übereinstimmender Dateninhalt durch die Hardwarebeschleunigerschaltung (6) detektiert wird, die Hardwarebeschleunigerschaltung (6) des Weiteren dafür ausgebildet ist, die Microcontroller-Einheit (3) des Zählers (1) aus einem Schlummermodus aufzuwecken, um Daten zu verarbeiten, die in Datenfeldern des empfangenen Frames (F) transportiert wurden,
wobei der Drahtloslink ein drahtloser M-Bus ist und
wobei die Hardwarebeschleunigerschaltung (6) des Zählers (1) ein Register umfasst, das dafür ausgelegt ist, einen Erwartungs-Aufweckwert für mindestens ein Header-Feld des empfangenen Frames (F) zu speichern, der durch den Zähler (1) erwartet wird, um die Microcontroller-Einheit (3) des jeweiligen Zählers (1) aufzuwecken.

9. Zähler nach Anspruch 8, wobei die Hardwarebeschleunigerschaltung (6) dafür ausgebildet ist, den Dateninhalt von Folgendem zu überprüfen:
eines Längen-Header-Feldes (L), das eine Länge des empfangenen Frames (F) angibt, und/oder
eines Steuerungs-Header-Feldes (C), das einen Frame-Typ des empfangenen Frames (F) angibt und einen Funktionscode hat, und/oder
eines ID-Header-Feldes (M), das eine Hersteller-ID des sendenden Gerätes umfasst und/oder
eines Adress-Header-Feldes (A), das eine Adresse des sendenden Gerätes anzeigt.

10. Zähler nach den Ansprüchen 8 oder 9, wobei die Hardwarebeschleunigerschaltung (6) dafür ausgebildet ist, eine zyklische Redundanzüberprüfung (CRC) unter Verwendung eines zuvor festgelegten CRC-Polynoms auszuführen und die Microcontroller-Einheit (3) des Zählers (1) aufzuwecken, wenn die CRC erfolgreich ist.

11. Zähler nach einem der vorangehenden Ansprüche 8 bis 10, wobei die Hardwarebeschleunigerschaltung (6) einen Timer umfasst, der dafür ausgelegt ist, den Transceiver des Zählers (1) periodisch aufzuwecken, um Frames (F) zu empfangen, die über den Drahtloslink gesendet werden.

12. Zähler nach einem der vorangehenden Ansprüche 8 bis 11, wobei in den Transceiver (2) und die Microcontroller-Einheit (3) des Zählers (1) eine Versorgungsspannung von einer Batterie eingespeist wird, die in dem Zähler (1) angeordnet ist.

13. Zähler nach einem der vorangehenden Ansprüche 8 bis 12, wobei die Hardwarebeschleunigerschaltung (6) in den Transceiver (2) des Zählers (1) integriert ist.

14. Drahtlos arbeitendes Zählersystem, das mindestens einen Zähler (1) nach einem der vorangehenden Ansprüche 8 bis 13 umfasst, die mittels eines Drahtloslinks in einem Home-Area-Network untereinander verbunden sind, sowie einen Gateway (8) umfasst, der mit einem Server (9) eines Versorgungsdienste-Anbieters in einem Wide-Area-Network verbunden ist.

15. Drahtlos arbeitendes Zählersystem nach Anspruch 14, wobei der Zähler (1) dafür ausgelegt ist, eine Quantität eines Versorgungsmediums zu messen, das durch einen Verbraucher verbraucht wurde, und die gemessene Quantität über den Drahtloslink zu übermitteln.

## Revendications

1. Procédé pour réduire la consommation d'énergie d'un dispositif de mesure (1) comportant un émetteur-récepteur (2) pour une communication sans fil au moyen de trames (F) transmises par l'intermédiaire d'une liaison sans fil, et une unité de microcontrôleur (3) pour le traitement de données,
le procédé comprenant les étapes consistant à :
(a) contrôler un préambule et/ou un mot de synchronisation d'une trame (F) reçue par l'émetteur-récepteur (2) par un circuit d'accélération matérielle (6) dudit émetteur-récepteur (2),
(b) si un préambule et/ou un mot de synchronisation correspondant a été détecté par ledit circuit d'accélération matérielle (6), contrôler par ledit circuit d'accélération matérielle (6) le contenu de données dans au moins un champ d'en-tête de la trame reçue (F) ; et
(c) si un contenu de données correspondant dans ledit au moins un champ d'en-tête a été détecté par ledit circuit d'accélération matérielle (6), réveiller l'unité de microcontrôleur (3) qui est dans un mode veille par ledit circuit d'accélération matérielle (6) pour traiter des données transportées dans des champs de données de la trame reçue (F),
dans lequel la liaison sans fil est un M-bus sans fil, et
dans lequel le circuit d'accélération matérielle (6) du dispositif de mesure (1) comprend un registre, qui stocke une valeur de réveil d'attente pour chaque champ d'en-tête d'une trame reçue (F) attendue par le dispositif de mesure (1) pour réveiller l'unité de microcontrôleur (3) du dispositif de mesure respectif (1).

2. Procédé selon la revendication 1, dans lequel le circuit d'accélération matérielle (6) contrôle le contenu de données de :
un champ d'en-tête de longueur (L) indiquant une longueur de la trame reçue (F),
et/ou un champ d'en-tête de contrôle (C) indiquant un type de trame de la trame reçue (F) et ayant un code de fonction,
et/ou un champ d'en-tête d'ID (M) comprenant un ID de fabricant du dispositif émetteur,
et/ou un champ d'en-tête d'adresse (A) indiquant une adresse du dispositif émetteur.

3. Procédé selon la revendication 1 ou 2, dans lequel le circuit d'accélération matérielle (6) effectue un contrôle de redondance cyclique (CRC) en utilisant un polynôme CRC prédéterminé, et réveille l'unité de microcontrôleur (3) si le contrôle CRC est réussi.

4. Procédé selon l'une des revendications précédentes 1 à 3, dans lequel l'émetteur-récepteur (2) est un émetteur-récepteur RF qui fonctionne dans une bande de 868 MHz et/ou une bande de 433 MHz et/ou une bande de 169 MHz.

5. Procédé selon l'une quelconque des revendications 1 à 4, dans lequel la valeur de réveil d'attente est écrite par l'unité de microcontrôleur (3) dans le registre du circuit d'accélération matérielle (6) avant que l'unité de microcontrôleur (3) n'entre en mode veille.

6. Procédé selon la revendication 5, dans lequel une minuterie dudit circuit d'accélération matérielle (6) réveille périodiquement l'émetteur-récepteur (2) pour recevoir des trames (F) à contrôler par le circuit d'accélération matérielle (6).

7. Procédé selon la revendication 6, dans lequel la minuterie du circuit d'accélération matérielle (6) est réglée par l'unité de microcontrôleur (3).

8. Dispositif de mesure, comprenant :
un émetteur-récepteur (2) pour une communication sans fil au moyen de trames (F) transmises par l'intermédiaire d'une liaison sans fil et comprenant une unité de microcontrôleur (3) pour le traitement de données,
dans lequel le dispositif de mesure (1) comporte un circuit d'accélération matérielle (6) configuré pour contrôler un préambule et/ou un mot de synchronisation d'une trame (F) reçue par l'émetteur-récepteur (2), et si un préambule correspondant et/ou un mot de synchronisation correspondant est détecté par ledit circuit d'accélération matérielle (6), le circuit d'accélération matérielle (6) est en outre configuré pour contrôler le contenu de données d'au moins un champ d'en-tête de la trame reçue (F), et si un contenu de données correspondant est détecté par le circuit d'accélération matérielle (6), le circuit d'accélération matérielle (6) est en outre configuré pour réveiller l'unité de microcontrôleur (3) du dispositif de mesure (1) qui est dans un mode veille pour traiter des données transportées dans des champs de données de la trame reçue (F),
dans lequel la liaison sans fil est un M-bus sans fil, et
dans lequel le circuit d'accélération matérielle (6) du dispositif de mesure (1) comprend un registre qui est conçu pour stocker une valeur de réveil d'attente pour au moins un champ d'en-tête de la trame reçue (F) attendue par le dispositif de mesure (1) pour réveiller l'unité de microcontrôleur (3) du dispositif de mesure respectif (1).

9. Dispositif de mesure selon la revendication 8, dans lequel le circuit d'accélération matérielle (6) est configuré pour contrôler le contenu de données de :
un champ d'en-tête de longueur (L) indiquant une longueur de la trame (F) ; et/ou
un champ d'en-tête de contrôle (C) indiquant un type de trame de la trame reçue (F) et ayant un code de fonction et/ou
un champ d'identification d'en-tête d'ID (M) comprenant un ID de fabricant du dispositif émetteur, et/ou un champ d'adresse (A) indiquant une adresse du dispositif émetteur.

10. Dispositif de mesure selon les revendications 8 ou 9, dans lequel le circuit d'accélération matérielle (6) est configuré pour effectuer un contrôle de redondance cyclique (CRC) en utilisant un polynôme CRC prédéterminé et réveiller l'unité de microcontrôleur (3) du dispositif de mesure (1) si le contrôle CRC est réussi.

11. Dispositif de mesure selon l'une quelconque des revendications précédentes 8 à 10, dans lequel le circuit d'accélération matérielle (6) comprend une minuterie conçue pour réveiller périodiquement l'émetteur-récepteur du dispositif de mesure (1) pour recevoir des trames (F) transmises par la liaison sans fil.

12. Dispositif de mesure selon l'une quelconque des revendications précédentes 8 à 11, dans lequel l'émetteur-récepteur (2) et l'unité de microcontrôleur (3) du dispositif de mesure (1) sont alimentés par une tension d'alimentation d'une batterie fournie dans ledit dispositif de mesure (1).

13. Dispositif de mesure selon l'une quelconque des revendications précédentes 8 à 12, dans lequel ledit circuit d'accélération matérielle (6) est intégré dans l'émetteur-récepteur (2) dudit dispositif de mesure (1).

14. Système de mesure sans fil comprenant au moins un dispositif de mesure (1) selon l'une quelconque des revendications précédentes 8 à 13, connectés l'un à l'autre par l'intermédiaire d'une liaison sans fil dans un réseau local et comprenant une passerelle (8) connectée à un serveur (9) d'un fournisseur de services publics dans un réseau étendu.

15. Système de mesure sans fil selon la revendication 14, dans lequel le dispositif de mesure (1) est conçu pour mesurer une quantité d'un service public consommé par un consommateur et pour notifier la quantité mesurée par l'intermédiaire de la liaison sans fil.
